# EUROPEAN PATENT SPECIFICATION

(11) **EP 3 565 067 B1**
(45) Date of publication and mention of the grant of the patent: **07.07.2021**
(21) Application number: 18170013.9
(22) Date of filing: 30.04.2018
(51) Int. Cl.: H01R 13/73, B60R 16/02

(54) **AN ELECTRICAL CONNECTION FOR A TRACTOR-TRAILER**
ELEKTRISCHER STECKVERBINDER FÜR EINEN TRAKTORANHÄNGER
CONNEXION ÉLECTRIQUE POUR TRACTEUR-REMORQUE

(43) Date of publication of application: 06.11.2019
(73) Proprietor: Thermo King Corporation, Minneapolis, MN 55420 (US)
(72) Inventor: DOERRE, Holger, 45133 Essen (DE); AUGENSTEIN, Eckardt, 45147 Essen (DE)
(74) Representative: Haseltine Lake Kempner LLP

(56) References cited:
- GB-A- 2 285 544
- US-A1- 2013 040 467

## Description

The disclosure relates to an electrical connection for a tractor-trailer.

Tractor-trailers (also referred to as semi-trailer trucks (colloquially, semi trucks or just semis) or articulated lorries (colloquially artics)) are commonly used to carry freight and generally comprise a tractor unit and a trailer which is coupled to and driven by the tractor unit. The trailer is typically a semi-trailer which does not have a front axle such that its weight is taken predominantly by the tractor unit. The trailer is attached to the tractor unit via a fifth wheel coupling which allows the tractor unit to articulate relative to the trailer.

Electrical connections are typically formed between the tractor unit and the trailer. US 2013/040467, for example, is concerned with a device for supporting an electrical connection. Generally speaking, an electrical connection may be used to provide power to lights on the trailer or other ancillary devices such as trailer refrigeration units. Such electric connections are typically formed using coiled (spiral) cables which are able to lengthen as the tractor unit articulates relative to the trailer. However, when manoeuvring around sharp bends or on the parking yard, the coiled cables are stretched to their extreme and this can put a high sideward pull stress on the connection between the cable and the tractor and/or trailer. This is particularly the case for cables that are designed to transfer high power at Class 2 voltages as these cables are rather heavy and therefore need to be designed to provide high restoring forces.

Due to the high stress and the high number of cycles these cable connections go through during typical operation, two failure modes are frequently observed:
1. the connector gets pulled away from the socket slightly as the coiled cable pulls it to the side, thus leading to water ingress and consequently short circuits; and
2. the repeated sharp bending of the cable causes the wires to break (typically after a few thousand actuations).

It is therefore desired to provide an electrical connection for a tractor-trailer which addresses the issues described above.

According to the invention there is provided an electrical connection for a tractor-trailer comprising: a coiled cable provided with a connector plug at one end; socket configured to receive the connector plug of the coiled cable to detachably connect the coiled cable to the socket; and a mounting bracket attachable to a tractor unit or trailer of the tractor-trailer; wherein the socket is hingedly connected to the mounting bracket by a universal joint to allow the socket to pivot when the tractor unit articulates relative to the trailer.

The electrical connection may further comprise a jumper cable for connecting the socket to a power source or sink.

The jumper cable may extend from a lower surface of the socket.

The jumper cable may extend from the socket along an axis which is parallel to a pivot axis of the socket with the mounting bracket.

The jumper cable may extend from the socket along an axis which is perpendicular to a longitudinal axis of the connector plug.

The electrical connection may further comprise a cable cleat for affixing the jumper cable to the tractor unit or trailer adjacent the mounting bracket.

The mounting bracket may define first and second flanges which space a pivot axis of the socket with the mounting bracket away from the tractor unit or trailer.

The socket may be received between the first and second flanges such that the pivot axis passes through the socket.

The electrical connection may further comprise a carrier which is hingedly connected to the mounting bracket, wherein the socket is affixed to the carrier.

The electrical connection may further comprise a mounting rail for attachment to the tractor unit or trailer, wherein the mounting bracket is formed on or connected to the mounting rail.

The electrical connection may comprise first and second sockets which are hingedly connected to first and second mounting brackets attachable to the tractor unit and trailer respectively; wherein the coiled cable is provided with first and second connector plugs at first and second ends which are detachably connected to the first and second sockets.

Embodiments will now be described by way of example only, with reference to the Figures, in which:
Figure 1 is a perspective view of an electrical connection not according to the invention; and
Figure 2 is a plan view of a hinge portion of an electrical connection not according to the present invention.

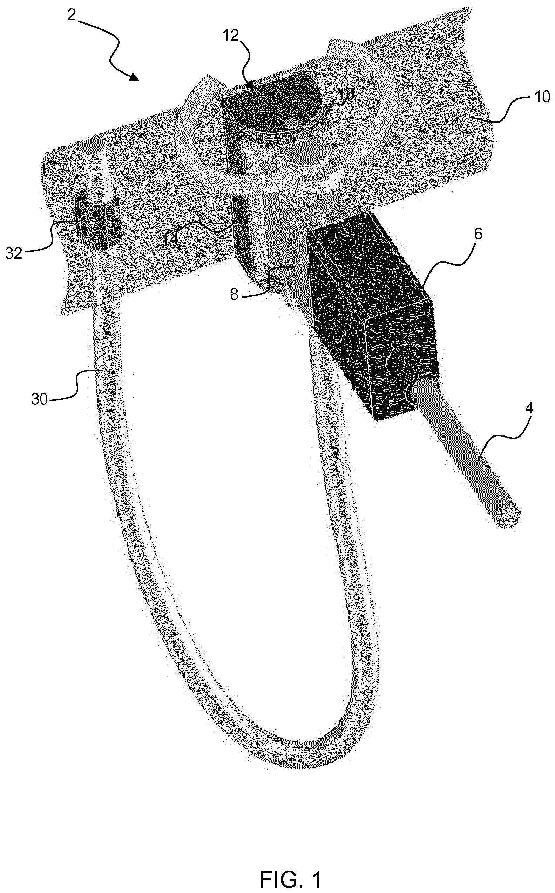

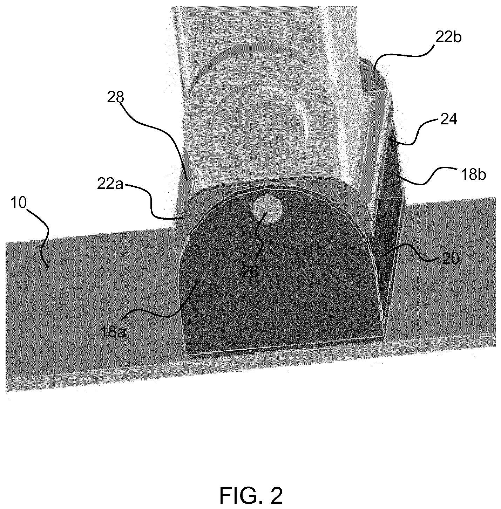

Figures 1 and 2 show an electrical connection 2 for a tractor-trailer.

The electrical connection 2 comprises a coiled electrical cable 4 (it is noted that the coiled part of the cable is not visible in Figure 1) which terminates at one end in a connector plug 6.

As shown in Figure 1, the connector plug 6 of the coiled cable 4 engages with a complementary socket 8. The socket 8 is connected to a mounting rail 10 via a pivot hinge 12.

The pivot hinge 12 comprises a bracket 14 and a carrier 16 which is pivotably mounted to the bracket 14.

The bracket 14 of the pivot hinge 12 is generally U-shaped and, as shown in Figure 2, comprises a first, upper flange portion 18a and a second, lower flange portion 18b which each project perpendicularly from either end of a mounting portion 20. The upper and lower flange portions 18a, 18b are thus parallel, but spaced from one another. The carrier 16 of the pivot hinge 12 is also generally U-shaped and comprises a first, upper flange portion 22a and a second, lower flange portion 22b which each project perpendicularly from either end of a mounting portion 24.

The bracket 14 and carrier 16 are dimensioned such that the carrier 16 can be received within the bracket 14. Specifically, the upper and lower flange portions 22a, 22b of the carrier 16 are received within the upper and lower flange portions 18a, 18b of the bracket 14. The upper and lower flange portions 22a, 22b of the carrier 16 each comprise a pin 26 (only the upper pin is visible in the Figures) which project perpendicularly from the upper and lower flange portions 22a, 22b in opposite directions. The pins 26 are received within corresponding holes formed in the upper and lower flange portions 18a, 18b of the bracket 14. It will be appreciated that this arrangement may be reversed such that the pins project from the upper and lower flange portions 18a, 18b of the bracket 14 and the carrier 16 is instead provided with receiving holes. Alternatively, pins or other similar elements may pass through openings formed in both the bracket 14 and the carrier.

The carrier 16 is therefore pivotably coupled to the bracket 14 and thus can rotate about the pins 26. The pivot point of the pivot hinge 12 is spaced sufficiently from the mounting portion 20 of the bracket 14 such that the carrier 16 does not come into contact with the mounting portion 20 of the bracket 14. The carrier 16 is thus able to rotate freely relative to the bracket 14.

The socket 8 is connected to the carrier 16 via a back plate portion 28 which, in this example, is integrally formed with the socket 8. The back plate portion 28 comprises a plurality of fixing holes (in this case, one at each of the four corners of the back plate portion 28) which can receive suitable fasteners, such as bolts or screws, to connect the socket 8 to the mounting portion 24 of the carrier 16. The socket 8 is connected to the mounting portion 24 such that the back plate portion 28 is received between the upper and lower flange portions 22a, 22b. The pivot (rotational) axis of the hinge 12 therefore passes through the socket 8.

The socket 8 is therefore pivotably or hingedly connected to the mounting rail 10 via the pivot hinge 12. The pivot hinge 12 allows the socket to rotate through 90 degrees in either direction.

The pivot hinge 12 physically connects the socket 8 to the tractor or trailer, but does not provide any electrical connection. This function is instead provided by a jumper cable 30 (also referred to as a cable sling). The jumper cable 30 is connected at one end to the socket 8 and is used to connect the socket 8 to a power source or sink. In this example, the jumper cable 30 extends from a lower surface of a main, body portion of the socket 8. The jumper cable 30 therefore extends from the socket 8 along an axis which is parallel to the rotational axis of the pivot hinge 12 and perpendicular to a longitudinal axis of the coiled cable 4 (connector plug 6). The jumper cable 30 is connected to the mounting rail 10 by a cable cleat 32 which holds the jumper cable 30 in place. The jumper cable 30 may be detachably connected to the socket 8. The jumper cable 30 is longer than the distance between the socket 8 and the cable cleat 32 and so hangs in a U-shape.

The coiled cable 4 may extend between a tractor unit and a trailer of a tractor-trailer. The tractor unit and/or trailer may be provided with a socket 8 which is hingedly mounted to a mounting rail 10, as described previously, with jumper cables 30 connecting the sockets 8 to the power source and sink respectively.

In use, when the tractor unit and trailer are aligned (i.e. when driving straight), the socket 8 on the tractor unit and the socket 8 on the trailer are spaced from one another by a first distance. When the tractor unit and trailer articulate relative to one another (i.e. when turning), the separation between the sockets 8 increases and they are offset laterally from one another. The increased spacing is accommodated by the coiled cable 4 which increases in length. The lateral offset of the sockets 8 creates a torsional force on the sockets 8 which causes the sockets 8 to rotate relative to the bracket 14 of the pivot hinge 12. The hinges 12 therefore allow the sockets 8 to remain aligned with a longitudinal axis of the coiled cable 4 and thus avoid stresses (i.e. bending forces) being generated in the connections formed between the cable itself and its connector plugs 6 and also between the connector plugs 6 and sockets 8.

As described previously, the rotational axis of the hinge 12 passes through the socket 8 and is located as close to the connector plug 6 as possible in order to minimise the space envelope required in the direction of travel.

It will be appreciated that the end of the jumper cable 30 which is connected to the socket 8 has a very small range of movement since the connection with the socket 8 is formed close to the rotational axis of the hinge 12. Consequently, minimal stress is generated in the jumper cable 30 and the jumper cable 30 may be kept as short as possible. In particular, the increased length (i.e. the U-shape) of the jumper cable 30 allows it to accommodate the range of movement. The length of the jumper cable 30 may be kept to a minimum such that it does not hang too low and in some examples may hang down by less than 25cm from the socket 8. In other examples, the connection between the jumper cable 30 and the socket 8 may be aligned with the rotational axis of the hinge 12 so that it does not move as the socket 8 rotates relative to the bracket 14 of the hinge 12.

Although the socket 8 has been described as being connected to the hinge 12 via the carrier 16, in other examples the carrier may be integrally formed with the socket 8 which engages directly with the bracket 14. In other examples, the bracket 14 of the hinge 12 may be integrally formed with the mounting rail 10. In fact, the bracket may 14 be integrally formed with or connected to any other part of the tractor unit or trailer.

The bracket of the hinge need not be U-shaped and may instead be formed by separate upper and lower members. According to the invention, the hinge is formed as a universal (Cardan) joint. This allows articulation about two rotational axes (two degrees of freedom). Such a joint may be formed by a pair of hinges oriented at 90 degrees to each other. For example, a pair of U-shaped brackets may be oriented at 90 degrees to each other and connected via a cruciform element which defines a first pair of pins along a first axis and a second pair of pins along a second axis which is perpendicular to the first axis.

Although the socket 8 has been described as being connected to the mounting portion 24 such that the back plate portion 28 is received between the upper and lower flange portions 22a, 22b, it may instead connect to the opposite side of the mounting portion 24 such that the socket 8 is spaced from the pivot (rotational) axis of the hinge 12.

Although the coiled cable has been described as having a connector plug which engages with a socket, this is not intended to imply that the plug is a male element and the socket is a female element. The connector plug of the coiled cable may comprise male and/or female elements which engage with complementary elements of the socket.

It is not necessary that both ends of the electrical connection comprise hinges and it will be appreciated that benefits may be realised by having a hinge at only one end of the cable 4. Further, in some examples, the socket 8 may articulate by less than 90 degrees in each direction (as a result of the socket 8 or carrier 16 coming into contact with the mounting bracket 14).

The arrangements described above may also be used to form electrical connections in tractor-trailers formed by a rigid truck towing a trailer via a drawbar. It may also be used between two trailers.

## Claims

1. An electrical connection (2) for a tractor-trailer comprising:
a cable (4) provided with a connector plug (6) at one end;
a socket (8) configured to receive the connector plug (6) of the cable (4) to detachably connect the cable (4) to the socket (8); and
a mounting bracket (14) attachable to a tractor unit or trailer of the tractor-trailer;
**characterised in that**:
the cable (4) is coiled; and
the socket (8) is hingedly connected to the mounting bracket (14) by a universal joint to allow the socket (8) to pivot when the tractor unit articulates relative to the trailer.

2. An electrical connection (2) as claimed in claim 1, further comprising a jumper cable (30) for connecting the socket to a power source or sink.

3. An electrical connection (2) as claimed in claim 2, wherein the jumper cable (30) extends from a lower surface of the socket (8).

4. An electrical connection (2) as claimed in claim 2 or 3, wherein the jumper cable (30) extends from the socket (8) along an axis which is parallel to a pivot axis of the socket (8) with the mounting bracket (14).

5. An electrical connection (2) as claimed in any of claims 2 to 4, wherein the jumper cable (30) extends from the socket (8) along an axis which is perpendicular to a longitudinal axis of the connector plug (6).

6. An electrical connection (2) as claimed in any of claims 2 to 5, further comprising a cable cleat (32) for affixing the jumper cable (30) to the tractor unit or trailer adjacent the mounting bracket (14).

7. An electrical connection (2) as claimed in any of the preceding claims, wherein the mounting bracket (14) defines first and second flanges (18) which space a pivot axis of the socket (8) with the mounting bracket (14) away from the tractor unit or trailer.

8. An electrical connection (2) as claimed in claim 7, wherein the socket (8) is received between the first and second flanges (18) such that the pivot axis passes through the socket (8).

9. An electrical connection (2) as claimed in any of the preceding claims, further comprising a carrier (16) which is hingedly connected to the mounting bracket (14), wherein the socket (8) is affixed to the carrier (16).

10. An electrical connection (2) as claimed in any of the preceding claims, further comprising a mounting rail (10) for attachment to the tractor unit or trailer, wherein the mounting bracket (14) is formed on or connected to the mounting rail (10).

11. An electrical connection (2) as claimed in any of the preceding claims, wherein the electrical connection (2) comprises first and second sockets which are hingedly connected to first and second mounting brackets attachable to the tractor unit and trailer respectively; wherein the coiled cable is provided with first and second connector plugs at first and second ends which are detachably connected to the first and second sockets.

## Patentansprüche

1. Elektrischer Steckverbinder (2) für einen Traktoranhänger, umfassend:
ein Kabel (4), das an einem Ende mit einem Anschlussstecker (6) versehen ist;
eine Steckdose (8), die dazu ausgelegt ist, den Anschlussstecker (6) des Kabels (4) aufzunehmen, um das Kabel (4) lösbar mit der Steckdose (8) zu verbinden; und
eine Montagehalterung (14), die an einer Traktoreinheit oder einem Anhänger des Traktoranhängers anbringbar ist;
**dadurch gekennzeichnet, dass**:
das Kabel (4) spiralförmig gewickelt ist; und
die Steckdose (8) über ein Kreuzgelenk gelenkig mit der Montagehalterung (14) verbunden ist, um ein Schwenken der Steckdose (8) zu ermöglichen, wenn der Traktor relativ zum Anhänger schwenkt.

2. Elektrischer Steckverbinder (2) gemäß Anspruch 1, ferner umfassend ein Überbrückungskabel (30) zum Verbinden der Steckdose mit einer Stromquelle oder -senke.

3. Elektrischer Steckverbinder (2) gemäß Anspruch 2, wobei sich das Überbrückungskabel (30) von einer unteren Fläche der Steckdose (8) erstreckt.

4. Elektrischer Steckverbinder (2) gemäß Anspruch 2 oder 3, wobei sich das Überbrückungskabel (30) von der Steckdose (8) entlang einer Achse erstreckt, die parallel zu einer Schwenkachse der Steckdose (8) mit der Montagehalterung (14) ist.

5. Elektrischer Steckverbinder (2) gemäß einem der Ansprüche 2 bis 4, wobei sich das Überbrückungskabel (30) von der Steckdose (8) entlang einer Achse erstreckt, die rechtwinklig zu einer Längsachse des Anschlusssteckers (6) ist.

6. Elektrischer Steckverbinder (2) gemäß einem der Ansprüche 2 bis 5, ferner umfassend eine Kabelklemme (32) zum Befestigen des Überbrückungskabels (30) am Traktor oder Anhänger angrenzend an die Montagehalterung (14).

7. Elektrischer Steckverbinder (2) gemäß einem der vorhergehenden Ansprüche, wobei die Montagehalterung (14) einen ersten und zweiten Flansch (18) definiert, die eine Schwenkachse der Steckdose (8) mit der Montagehalterung (14) vom Traktor oder Anhänger weg beabstanden.

8. Elektrischer Steckverbinder (2) gemäß Anspruch 7, wobei die Steckdose (8) zwischen dem ersten und zweiten Flansch (18) aufgenommen ist, sodass die Schwenkachse durch die Steckdose (8) hindurch verläuft.

9. Elektrischer Steckverbinder (2) gemäß einem der vorhergehenden Ansprüche, ferner umfassend einen Träger (16), der gelenkig mit der Montagehalterung (14) verbunden ist, wobei die Steckdose (8) an dem Träger (16) befestigt ist.

10. Elektrischer Steckverbinder (2) gemäß einem der vorhergehenden Ansprüche, ferner umfassend eine Montageschiene (10) zur Befestigung am Traktor oder Anhänger, wobei die Montagehalterung (14) an der Montageschiene (10) ausgebildet oder mit dieser verbunden ist.

11. Elektrischer Steckverbinder (2) gemäß einem der vorhergehenden Ansprüche, wobei der elektrische Steckverbinder (2) eine erste und eine zweite Steckdose umfasst, die gelenkig mit einer ersten und einer zweiten Montagehalterung verbunden sind, die am Traktor bzw. Anhänger angebracht werden können; wobei das Spiralkabel an einem ersten und einem zweiten Ende mit einem ersten und einem zweiten Anschlussstecker versehen ist, die lösbar mit der ersten und der zweiten Steckdose verbunden sind.

## Revendications

1. Connexion électrique (2) pour un tracteur-remorque, comprenant :
un câble (4) muni d'une fiche connectrice (6) à une extrémité ;
une prise (8) configurée pour recevoir la fiche connectrice (6) du câble (4) pour connecter de manière amovible le câble (4) à la prise (8) ; et
un support de montage (14) pouvant être relié à une unité tractrice ou à une remorque du tracteur-remorque ;
**caractérisé en ce que** :
le câble (4) est enroulé ; et
la prise (8) est connectée par charnière au support de montage (14) par une articulation universelle pour permettre à la prise (8) de pivoter quand l'unité tractrice s'articule par rapport à la remorque.

2. Connexion électrique (2) selon la revendication 1, comprenant en outre un câble de raccordement (30) pour connecter la prise à une source d'énergie ou à un réservoir d'énergie.

3. Connexion électrique (2) selon la revendication 2, dans laquelle le câble de raccordement (30) s'étend depuis une surface inférieure de la prise (8).

4. Connexion électrique (2) selon la revendication 2 ou 3, dans laquelle le câble de raccordement (30) s'étend depuis la prise (8) suivant un axe qui est parallèle à un axe de pivotement de la prise (8) avec le support de montage (14).

5. Connexion électrique (2) selon l'une quelconque des revendications 2 à 4, dans laquelle le câble de raccordement (30) s'étend depuis la prise (8) suivant un axe qui est perpendiculaire à un axe longitudinal de la fiche connectrice (6).

6. Connexion électrique (2) selon l'une quelconque des revendications 2 à 5, comprenant en outre un serre-câble (32) pour fixer le câble de raccordement (30) à l'unité tractrice ou à la remorque à proximité du support de montage (14).

7. Connexion électrique (2) selon l'une quelconque des revendications précédentes, dans laquelle le support de montage (14) définit des premier et second rebords (18) qui espacent un axe de pivotement de la prise (8) avec le support de montage (14) à l'écart de l'unité tractrice ou de la remorque.

8. Connexion électrique (2) selon la revendication 7, dans laquelle la prise (8) est reçue entre les premier et second rebords (18) de sorte que l'axe de pivotement passe par la prise (8).

9. Connexion électrique (2) selon l'une quelconque des revendications précédentes, comprenant en outre un moyen porteur (16) qui est connecté par charnière au support de montage (14), la prise (8) étant fixée au moyen porteur (16).

10. Connexion électrique (2) selon l'une quelconque des revendications précédentes, comprenant en outre un rail de montage (10) destiné à être relié à l'unité tractrice ou à la remorque, le support de montage (14) étant formé sur le rail de montage (10) ou connecté à celui-ci.

11. Connexion électrique (2) selon l'une quelconque des revendications précédentes, la connexion électrique (2) comprenant des première et seconde prises qui sont connectées par charnière à des premier et second supports de montage pouvant être reliés respectivement à l'unité tractrice et à la remorque ; le câble enroulé étant muni de première et seconde fiches connectrices à des première et seconde extrémités, qui sont connectées de manière amovible aux première et seconde prises.
